# EUROPEAN PATENT APPLICATION

(11) **EP 3 926 887 A1**
(43) Date of publication of application: **22.12.2021**
(21) Application number: 20315306.9
(22) Date of filing: 18.06.2020
(51) Int. Cl.: H04L 9/00, H04L 9/32

(54) **METHOD OF BUILDING A PHYSICAL UNCLONABLE FUNCTION**

(71) Applicant: THALES DIS FRANCE SA, 92190 Meudon (FR)
(72) Inventor: Duval, Benjamin, 13881 Gemenos Cedex (FR); Berzati, Alexandre, 13881 Gemenos Cedex (FR); Fourquin, Olivier, 13881 Gemenos Cedex (FR)
(74) Representative: Grevin, Emmanuel

(57) **Abstract**

A method of building a physical unclonable function (PUF) value representative of a device. The PUF value is made of several bits which are individually generated by as many comparator-based cells embedded in the device. The method comprises the following steps:
- when generating at least one bit, measuring by a monitoring component, an additional data assigned to said at least one bit,
- checking the validity of said additional data by a verifier component, and
- selecting said at least one bit to build said PUF value only when said checking is successful.

## Description

### (Field of the invention)

The present invention relates to methods of building Physical Unclonable Functions (PUF). It relates particularly to methods of implementing PUF for a device comprising a plurality of electronical primitives.

### (Background of the invention)

A Physical Unclonable Function (PUF) is a function that is embodied in a physical structure and is easy to evaluate but extremely difficult to predict. An individual PUF device must be easy to make but practically impossible to duplicate, even given the exact manufacturing process that produced it. The intrinsic PUF microstructures characteristics depends on process variations during manufacture that are uncontrolled and cannot be monitored. Hence, when a physical stimulus is applied to the structure, it reacts in an unpredictable way due to the complex interaction of the stimulus with the physical microstructure of the component. The applied stimulus is called the challenge, and the reaction of the PUF is called the response. A specific challenge and its corresponding response together form a challenge-response pair which is specific to a given device. Thanks to PUF principle, the identity of the device is established by the properties of the microstructure itself.

Such a challenge-response pair must be steady. A PUF of a chip can be generated thanks to its electronic components.

As PUF could be used for tracking genuine devices or as a unique seed for cryptographic applications it should be robust against attacks.

Known attacks are so-called Side Channel attacks and Fault attacks. Side Channel attacks aim at obtaining PUF values by external observation. They may rely on applying current variations for example. Fault attacks aim at changing the PUF value. They may rely on FIB (Focused ion beam) or Laser to change behavior of transistors for example.

There is a need to strengthen the robustness of the system generating the PUF against attacks.

### (Summary of the Invention)

The invention aims at solving the above mentioned technical problem.

An object of the present invention is a method for building a physical unclonable function (PUF) value representative of a device. The PUF value is made of a plurality of bits which are individually generated by as many comparator-based cells embedded in the device. The method comprises the following steps:
- when generating at least one bit of said plurality of bits, measuring by a monitoring component, an additional data assigned to said at least one bit,
- checking the validity of said additional data by a verifier component, and
- selecting said at least one bit to build said PUF value only when said checking is successful.

Advantageously, said at least one bit may be generated by a current comparator-based cell which comprises a first current comparator, the monitoring component may be a second current comparator, inputs of said first and second current comparators may be reversed with respect to each other and the verifier component may check that outputs of said first and second current comparators are complementary.

Advantageously, the monitoring component may be a current measuring unit, said at least one bit may be generated by a current comparator-based cell which comprises a first current comparator that receives two current inputs (IP, IN) and the verifier component may check the validity of the additional data by verifying that said two current inputs (IP, IN) belong to a predefined range which is centered on a reference current input (Iref) received by said current comparator-based cell.

Advantageously, the monitoring component may be a current measuring unit, said at least one bit may be generated by a current comparator-based cell which comprises a first current comparator that receives a reference current input (Iref) and the verifier component may check the validity of the additional data by verifying that said reference current input (Iref) belongs to in a predefined range.

Advantageously, the monitoring component may latch an initial address used to trigger the generation of said at least one bit and retrieve a final address used to read said generated at least one bit and the verifier component may check the validity of the additional data by verifying that said initial address and final address are equal.

Advantageously, each bit of said plurality of bits may be generated in a random order.

Advantageously, the monitoring component may be a duration measurement unit, generation of said at least one bit may be triggered at a first time, said at least one bit may be read at a second time and the verifier component may check the validity of the additional data by verifying that at least a predefined duration has elapsed between said first and second times.

Another object of the present invention is a device comprising a plurality of comparator-based cells configured to individually generate as many bits used to build a physical unclonable function (PUF) value representative of said device. The device comprises a monitoring component configured to measure an additional data assigned to at least one bit of said bits when generating said at least one bit. The device comprises a verifier component configured to check the validity of said additional data and to select said at least one bit to build said physical unclonable function value only when said validity is successful checked.

Advantageously, the current comparator-based cell which generates said at least one bit may comprise a first current comparator, the monitoring component may be a second current comparator, inputs of said first and second current comparators may be reversed with respect to each other and the verifier component may be configured to check the validity of the additional data by verifying that outputs of said first and second current comparators are complementary.

Advantageously, the monitoring component may be a current measuring unit, the current comparator-based cell which generates said at least one bit may comprise a first current comparator which receives two current inputs (IP, IN) and the verifier component may be configured to check the validity of the additional data by verifying that said two current inputs (IP, IN) belong to a predefined range which is centered on a reference current input (Iref) received by said current comparator-based cell.

Advantageously, the monitoring component may be a current measuring unit, the current comparator-based cell which generates said at least one bit may comprise a first current comparator which receives a reference current input (Iref) and the verifier component may be configured to check the validity of the additional data by verifying that that said reference current input (Iref) belongs to in a predefined range.

Advantageously, the monitoring component may be configured to latch an initial address used to trigger the generation of said at least one bit and to retrieve a final address used to read said generated at least one bit and the verifier component may be configured to check the validity of the additional data by verifying that said initial address and final address are equal.

Advantageously, every bit of said plurality of bits may be generated in a random order.

Advantageously, the monitoring component may be a duration measurement unit, generation of said at least one bit may be triggered at a first time, said at least one bit may be retrieved at a second time and the verifier component may be configured to check the validity of the additional data by verifying that at least a predefined duration has elapsed between said first and second times.

Advantageously, the device may be a chip, a system-on-a-chip or a printed circuit board.

### (Brief description of the drawings)

Other characteristics and advantages of the present invention will emerge more clearly from a reading of the following description of a number of preferred embodiments of the invention with reference to the corresponding accompanying drawings in which:
- Figure 1A and 1B depict a schematic and block diagram representation illustrating an example circuit for implementing a device realized with current mirror according to an already known embodiment;
- Figure 2 depicts a schematic and block diagram representation illustrating an example circuit for generating a PUF protected by a duplicated current comparator according to an embodiment of the invention;
- Figure 3 depicts a schematic and block diagram representation illustrating an example circuit for generating a PUF protected by monitoring PUF cell current according to an embodiment of the invention;
- Figure 4 depicts a schematic and block diagram representation illustrating an example circuit for generating a PUF protected by monitoring the reference current input (Iref) according to an embodiment of the invention;
- Figure 5 depicts a schematic and block diagram representation illustrating an example circuit for generating a PUF protected by monitoring addresses used to generate and retrieve the PUF value according to an embodiment of the invention;
- Figure 6 depicts a schematic and block diagram representation illustrating an example circuit for generating a PUF protected by monitoring the time for reading a PUF value according to an embodiment of the invention;
- Figure 7 depicts schematically an example of architecture of a device configured to protect the system generating PUF values according to an embodiment of the invention; and
- Figure 8 depicts a flow diagram illustrating example operations of a device for securely selecting a bit for building the PUF value according to an example of the invention.

### (Detailed description of the preferred embodiments)

The invention may apply to any types of electronic devices comprising a plurality of active electronic primitives such as transistors. In this document, a primitive is an active electronic unit or electronic component. Preferably, the primitive is a basic electronic unit.

For example primitives may be vias, resistances, ring oscillators or SRAM cells.

Difference (in voltage or current) between two identical primitives is due to stochastic process mismatches. Distribution of values of difference between primitives follows a normal law. (Known as Gaussian distribution.)

The invention is well-suited for systems that generate a PUF value relying on current comparator-based cells.

In the following examples, the electronic device is a chip but it could be any other kind of integrated circuit, system-on-a-chip (SOC) or printed circuit board (PCB).

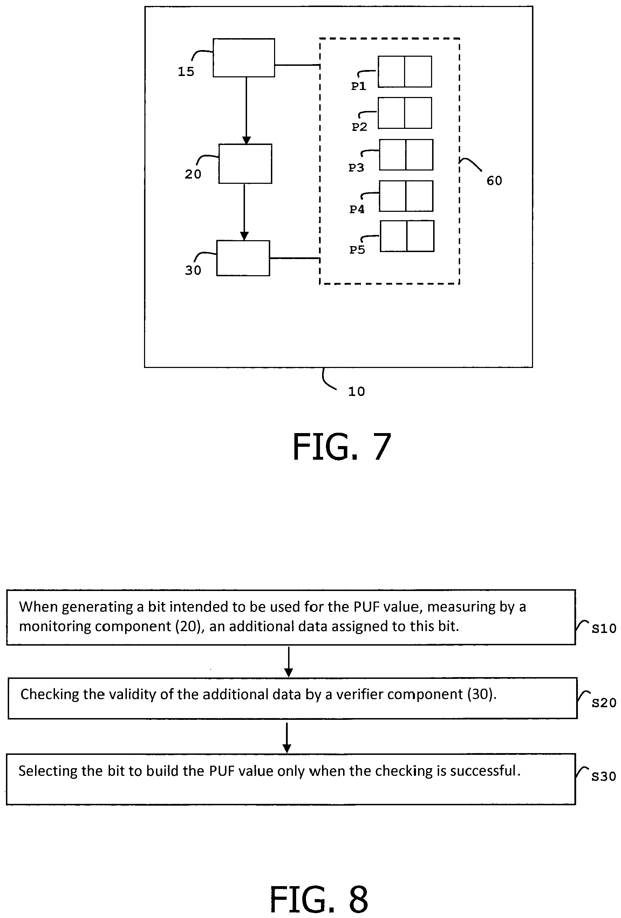

According to an embodiment of the invention shown at Figure 8, the method for building a PUF value representative of a device (10) is based on the fact that the PUF value is made of a plurality of bits which are individually generated by as many comparator-based cells embedded in the device. A step S10, when generating a bit intended to be used for building the PUF value, a monitoring component measures an additional data which is specific to the at least one bit. The additional data is automatically generated by at least one physical component of the device which is used during the bit generation.

At step S20, a verifier component checks the validity of the additional data, and at step S30, the at least one bit is selected to build the PUF value only if the checking performed by the verifier component is successful.

Figure 7 shows schematically an example of architecture of an electronic device configured to protect PUF generation according to an embodiment of the invention.

The device 10 may be a chip comprising a set 60 of electronic primitives which are coupled in pairs P1, ..., P5.

Each pair forms a PUF cell that is configured to individually generate a bit intended to be used to build a physical unclonable function (PUF) value representative of the device 10. The set 60 is not limited to five and may comprises a large number of PUF cells.

A PUF cell value is obtained by the comparison of an intrinsic characteristics of PUF pair. In a preferred embodiment, PUF cells values are obtained from comparison of current. Alternatively, PUF cells values may be based on voltage comparison.

The device 10 comprises a generator unit 15 which is adapted to generate an additional data assigned to a bit during the generating of a bit. The generator unit 15 may be a physical component of the device which is used during the bit generation even when the invention is not implemented.

The device 10 comprises a monitoring component 20 which is adapted to measure the additional data assigned to a generated bit.

The device 10 comprises a verifier component 30 configured to check the validity of the additional data and to select the bit (allocated to additional data) to build the PUF value only when the validity is successful checked.

The number of pairs to be used may be adjusted according to a security requirements specific to the usage of the device 10.

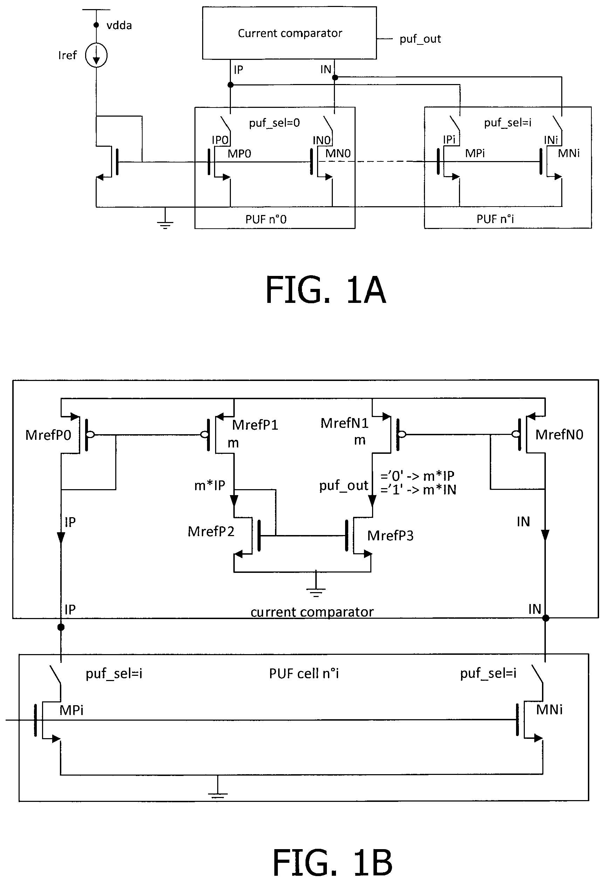

Figure 1A shows a schematic and block diagram representation illustrating an example circuit for implementing a device realized with current mirror according to an already known embodiment.

In this example, the PUF design is based on comparison of identical primitives. More precisely, it is based on current mirroring comparison.

The following legend applies:
vdda = power supply.
Iref = current reference.
IP and IN = Positive and Negative Input of current comparator.
Mpi and Mni = PUF cell primitives of PUF n°i.
IPi and INi=current issue from primitive Mpi and Mni.
puf_sel= vector allowing to select a PUF address.
Puf n°i = unit cell of PUF that may be selected by addressing address i.

NB: When puf_sel=i, Puf_n°i is addressed, current issue from primitives Mpi and Mni are compared (respectively IPi and INi). In this case IP=IPi and IN=Ini.

A cell is made of a pair of primitives. In the example of Figure 1A, two cells (PUF n°0 and PUF n°i) are represented. Each cell is connected to a unique current comparator and generates a bit which can be used to build the PUF response.

Figure 1B shows a schematic and block diagram representation illustrating an example circuit for implementing a current comparator coupled to a PUF cell according to an already known embodiment.

Figure 1B provides details on the internal structure of an example of implementation of the current comparator of Figure 1A.

Transistors MrefP0 and MrefN0 sense respectively current IP and IN issue from selected PUF cell.

The transistor MrefP1 copies current IP and multiplies it by m. So current issue from MPrefP1 is equals to m*IP. m is dependent on width and length of transistor MrefP0 and MrefP1.

In a standard implementation width and length of transistor MrefN0 may be equal to width and length of MrefP0.

Assuming that:
W0= width of transistor MrefP0 (and MrefN0),
L0= length of transistor MrefP0 (and MrefN0),
W1= width of transistor MrefP1 (and MrefN1),
L1= length of transistor MrefP1 (and MrefN1),
m is can be computed as follows: m=W1*L0/(W0*L1).

MrefP2 senses current issue from MrefP1.

Current flowing MrefN1 and MrefP3 depends on value of IP and IN:
if IP>IN current is equals to m*IN and puf_out='0'
if IP<IN current is equals to m*IP and puf_out='1'.

More detail can be found in the published WO2019081138A1 which is incorporated by reference herein.

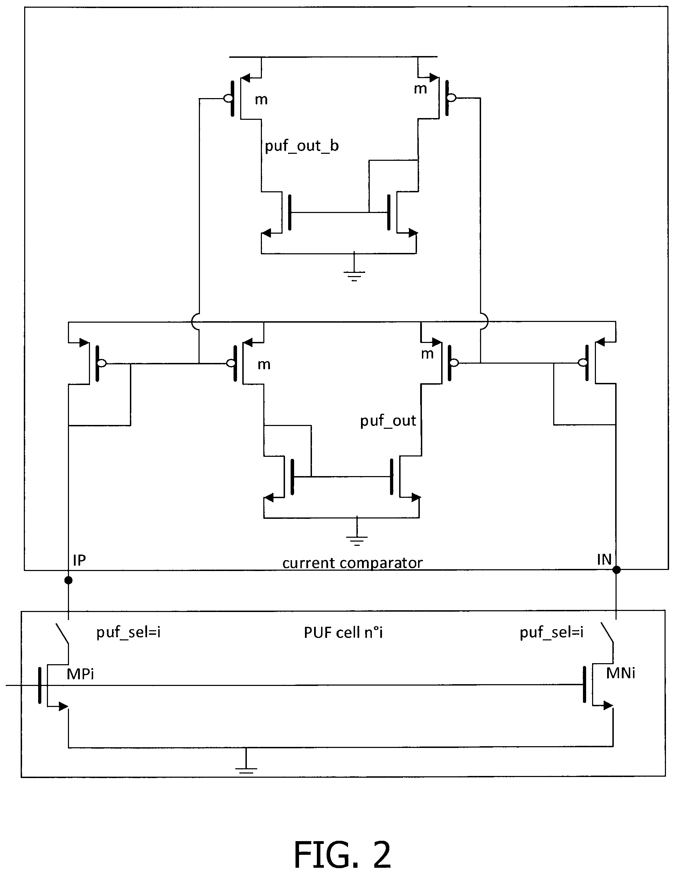

Figure 2 shows a schematic and block diagram representation illustrating an example circuit for generating a PUF protected by a duplicated current comparator according to an embodiment of the invention.

A PUF bit is generated by a current comparator-based cell, also named PUF cell.

For a PUF cell, the current comparator is duplicated so that the PUF cell is coupled to both two current comparators. In addition, inputs (coming from the PUF cell) of the two current comparators are reversed with respect to each other.

In this embodiment, the monitoring component is the second current comparator and the verifier component checks the validity of the additional data by verifying that the output of the first current comparator and the output of the second current comparator are complementary.

More precisely, the monitoring component may get the value of the output values generated by each current comparator: puf_out for the first current comparator and puf_out_b for the second current comparator. The verifier component may check that puf_out_b is the complementary output to puf_out. In other words, if puf_out is equal to 0, then puf_out_b should be equal to 1. If one comparator's output is stuck by an attacker, puf_out_b loses its mathematical link (of complementary) with puf_out for a PUF cell and an attack can be suspected.

An advantage of this embodiment is to detect a Fault attack which stuck the output of a current comparator.

It is to be noted that the embodiment of Figure 2 provides another advantage: The current consumption is the same whatever the PUF bit value. Consequently, there is no info leakage which could be retrieved by an attacker. The total current consumption of the two current comparators is equal to a value depending on the current values (IP & IN) issued by the PUF cell.

For instance, the predefined value may be equals to (2*m+1)*(IP+IN), where "*" stands for the mathematical multiplication operator and where "m" is the size ratio between the PMOS transistors mounted as a diode (grid and drain connected, those at the top on Figure 2 on the two ends) vs the transistors copying the current (the two PMOS in the center). The predefined value is independent of the generated PUF cell value.

An advantage of this embodiment is to prevent a side channel attack which monitors variation of current when reading a PUF response since there is nothing to monitor. The reading current of a 0 is equal to the reading current of a 1.

In a preferred embodiment, a current comparators is duplicated because PUF cells are based on current comparison. More generally, an embodiment of the invention consists in duplicating comparator doing comparison between electrical characteristics of PUF cell used to generate bit value.

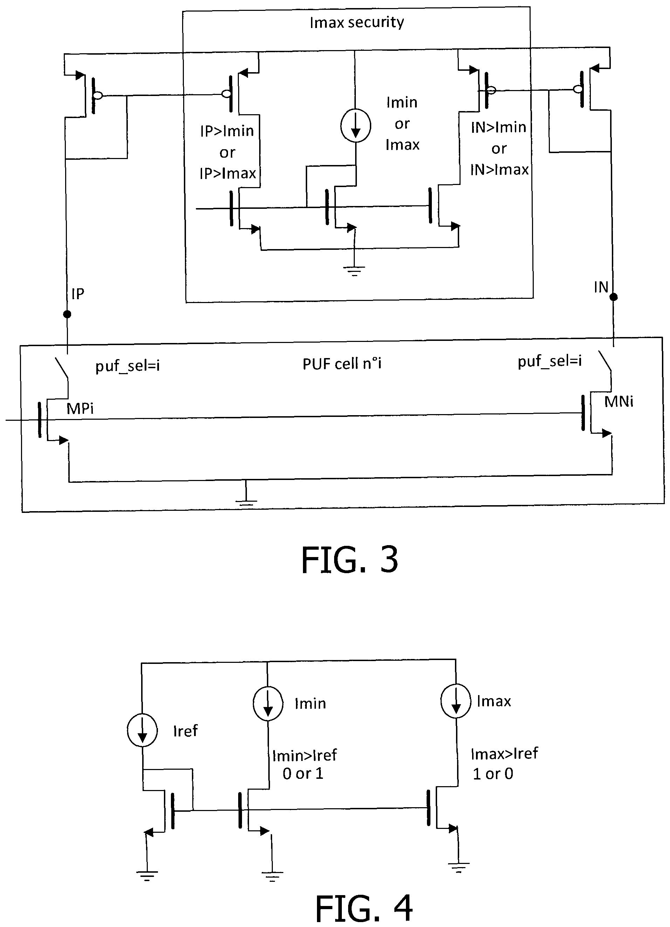

Figure 3 shows a schematic and block diagram representation illustrating a first example circuit for generating a PUF protected by monitoring PUF cell current according to an embodiment of the invention.

In this embodiment the monitoring component is a current measuring unit. Each bit is generated by a current comparator-based cell which comprises a first current comparator that receives two current inputs (IP and IN). The verifier component checks the validity of the additional data by verifying that the two current inputs (IP, IN) belong to a predefined range which is centered on the mean (Ipuf_mean) of all current issued from PUF cell. In a preferred embodiment range is centered on the reference current input (Iref) which is received by the current comparator-based cell.

Since the PUF cell is based on a current mirroring, current IP and IN should follow a Gaussian law centered on Ipuf_mean. Standard deviation can be known from stochastic mismatches model. Consequently a minimal current value Imin and a maximal current value Imax can be defined related with standard deviation. IP and IN should stay in the range defined by Imin and Imax when running in normal operating condition. If current issue from one of puf cell is lower than Imin or greater than Imax, it means that PUF cell is not under control.

In this example, the two current comparators treat IP vs Imax and IN vs Imax (or IP vs Imin and IN vs Imin). For instance values may be: Ipuf_mean=Iref=1uA, std_dev=100nA, Imax=Iref+5*std_dev=1500nA and Imin=Iref-5*std_dev=500nA. Thus if IP or IN does not belong to the range [500nA, 1500nA] the checking step fails and an alarm may be raised to inform the system and the bit generated by the PUF cell may be discarded.

An advantage of this embodiment is to detect Fault attacks aiming at modifying PUF cell(s) value by modifying current (IP or IN) issued from transistors MPi or MNi.

In the example of Figure 3, IP and IN are compared to Imin and Imax in two times. Alternatively, it is possible to compare at the same time IP and IN to Imin and Imax by duplicating the structure. An example of structure for one-time comparison applied to the reference current input Iref is proposed at Figure 4.

It is to be noted that the monitoring of the current is individually performed at the PUF cell level according to the embodiment of Figure 3. Thus even if an attacker changes the current in two different PUF cells so that the global consumption remains constant, the embodiment of Figure 3 allows to detect the attack.

In a preferred embodiment, currents are monitored because PUF cells are based on current comparison. More generally, an embodiment of the invention consists in monitoring electrical characteristics of PUF cell used to generate bit value and verifying they belong to in a predefined range.

Figure 4 shows a schematic and block diagram representation illustrating an example circuit for generating a PUF protected by monitoring the reference current input (Iref) according to an embodiment of the invention.

In this embodiment the monitoring component is a current measuring unit. The bit is generated by a current comparator-based cell which comprises a first current comparator that receives a reference current input Iref. The verifier component checks the validity of the additional data by verifying that said reference current input Iref belongs to in a predefined range.

In the example shown at Figure 4, Iref is compared to Imin and Imax at the same time. Alternatively, Iref could be compared in two times by comparing first to Imin and then to Imax (or the contrary).

An advantage of the embodiment of Figure 4 is to detect Fault attacks aiming at modifying the value of the reference current input Iref for which the device 10 has been previously qualified.

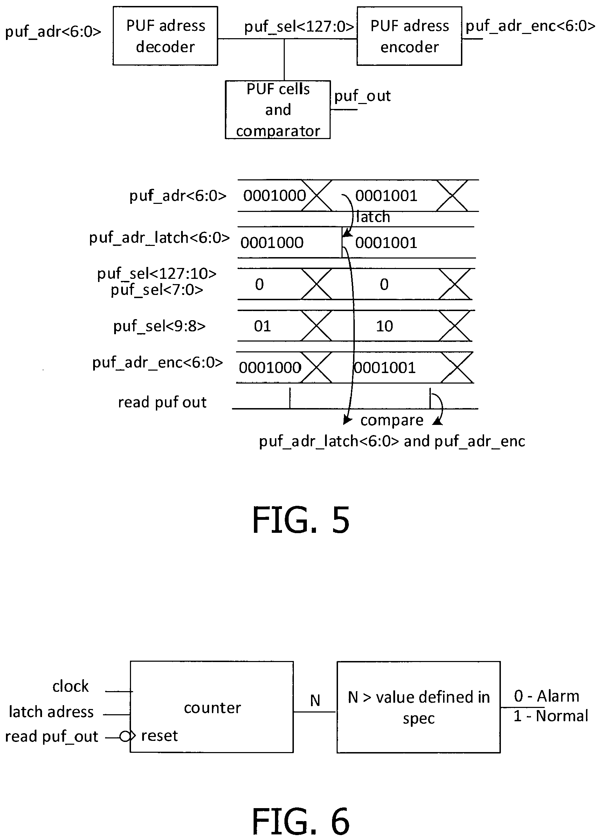

Figure 5 shows a schematic and block diagram representation illustrating an example circuit for generating a PUF protected by monitoring addresses used to generate and retrieve the PUF value according to an embodiment of the invention.

In this embodiment the monitoring component is configured to keep a track of the initial address used to trigger the generation of a bit generated by a PUF cell and to retrieve the final address used to read the generated bit. The verifier component checks the validity of the additional data by verifying that the initial address and the final address are the same.

More precisely, the monitoring component can latch the input of decoder just after selecting an address (puf_adr_latch) and to encode the bus of address puf_sel (puf_adr_enc). Then during puf cell evaluation (time between the moment when address is latch and the reading of puf value), the verifier component compares puf_adr_latch to puf_adr_enc to check they are equal. This ensures to read the desired PUF cell for which a bit generation has been requested.

The example provided at Figure 5 corresponds to an implementation of 128 PUF cells.

An advantage of the embodiment of Figure 5 is to detect Fault attacks aiming at modifying the address where the value of the bit generated by a PUF cell can be retrieved. Thus an attacker trying to modify the decoder to always read the same PUF cell can be defeated.

Advantageously, when building a PUF value, each needed bit may be generated in a random order (randomization of the index to access the PUF cells) so that to counter Side channel attacks.

Figure 6 shows a schematic and block diagram representation illustrating an example circuit for generating a PUF protected by monitoring the time for reading a PUF value according to an embodiment of the invention.

In this embodiment the monitoring component is a duration measurement unit. The generation of a bit is triggered at a first time and retrieved (i.e. read) at a second time. The verifier component checks the validity of the additional data by verifying that at least a predefined duration has elapsed between said first and second times.

For example, the clock of the system can be used to manage a counter. Count starts when the bit generation is triggered (for instance when the PUF cell address is latched) and is reinitialized after a reading of the bit value. The verifier component checks that the next reading occurs after a preset duration by controlling that the counter is above a predefined threshold tuned according the implemented hardware.

If the reading occurs before the counter reaches the defined threshold (value defined in spec), an alarm can be raised and/or the read bit can be discarded.

This ensures that a minimal time of reading is respected in order to defeat Fault attacks aiming at read the PUF cell result before the end of the whole process of bit generation. (i.e. before stabilization of the bit value)

An advantage of the invention is to be independent of the underlying technology used for the design of the device. It may apply to a wide range of devices.

The described embodiments of the invention provide security features that have no influence on the generated PUF value in normal working conditions.

Advantageously, the features described in the presented embodiments and examples may be combined to increase the security of the PUF generation.

The invention is not restricted to chip. It may apply to any device comprising a plurality of electronic basic elements which may be coupled by pairs. For example it applies to SOC systems or system comprising several chips.

It must be understood, within the scope of the invention, that the above-described embodiments are provided as non-limitative examples. The invention is not limited to the described embodiments or examples. Detailed embodiments and variations have been described above. As those skilled in the art will appreciate, a number of modifications and alternatives can be made to the above embodiments and variations whilst still benefiting from the inventions embodied therein.

## Claims

1. A method of building a physical unclonable function (PUF) value representative of a device (10), said physical unclonable function value being made of a plurality of bits which are individually generated by as many comparator-based cells embedded in the device,
**characterized in that** said method comprises the following steps:
- when generating at least one bit of said plurality of bits, measuring by a monitoring component (20), an additional data assigned to said at least one bit,
- checking the validity of said additional data by a verifier component (30), and
- selecting said at least one bit to build 'said physical unclonable function value only when said checking is successful.

2. The method according to claim 1, wherein said at least one bit is generated by a current comparator-based cell which comprises a first current comparator, wherein the monitoring component is a second current comparator, wherein inputs of said first and second current comparators are reversed with respect to each other and wherein the verifier component checks that outputs of said first and second current comparators are complementary.

3. The method according to claim 1, wherein the monitoring component is a current measuring unit, wherein said at least one bit is generated by a current comparator-based cell which comprises a first current comparator that receives two current inputs (IP, IN) and wherein the verifier component checks the validity of the additional data by verifying that said two current inputs (IP, IN) belong to a predefined range which is centered on a reference current input (Iref) received by said current comparator-based cell.

4. The method according to claim 1, wherein the monitoring component is a current measuring unit, wherein said at least one bit is generated by a current comparator-based cell which comprises a first current comparator that receives a reference current input (Iref) and wherein the verifier component checks the validity of the additional data by verifying that said reference current input (Iref) belongs to in a predefined range.

5. The method according to claim 1, wherein the monitoring component latches an initial address used to trigger the generation of said at least one bit and retrieves a final address used to read said generated at least one bit and wherein the verifier component checks the validity of the additional data by verifying that said initial address and final address are equal.

6. The method according to claim 5, wherein each bit of said plurality of bits is generated in a random order.

7. The method according to claim 1, wherein the monitoring component is a duration measurement unit, wherein generation of said at least one bit is triggered at a first time, wherein said at least one bit is read at a second time and wherein the verifier component checks the validity of the additional data by verifying that at least a predefined duration has elapsed between said first and second times.

8. A device (10) comprising a plurality of comparator-based cells configured to individually generate as many bits used to build a physical unclonable function (PUF) value representative of said device,
**characterized in that** said device comprises a monitoring component (20) configured to measure an additional data assigned to at least one bit of said bits when generating said at least one bit, and
**in that** said device comprises a verifier component (30) configured to check the validity of said additional data and to select said at least one bit to build said physical unclonable function value only when said validity is successful checked.

9. The device according to claim 8, wherein the current comparator-based cell which generates said at least one bit comprises a first current comparator, wherein the monitoring component is a second current comparator, wherein inputs of said first and second current comparators are reversed with respect to each other and wherein the verifier component is configured to check the validity of the additional data by verifying that outputs of said first and second current comparators are complementary.

10. The device according to claim 8, wherein the monitoring component is a current measuring unit, wherein the current comparator-based cell which generates said at least one bit comprises a first current comparator which receives two current inputs (IP, IN) and wherein the verifier component is configured to check the validity of the additional data by verifying that said two current inputs (IP, IN) belong to a predefined range which is centered on a reference current input (Iref) received by said current comparator-based cell.

11. The device according to claim 8, wherein the monitoring component is a current measuring unit, wherein the current comparator-based cell which generates said at least one bit comprises a first current comparator which receives a reference current input (Iref) and wherein the verifier component is configured to check the validity of the additional data by verifying that that said reference current input (Iref) belongs to in a predefined range.

12. The device according to claim 8, wherein the monitoring component is configured to latch an initial address used to trigger the generation of said at least one bit and to retrieve a final address used to read said generated at least one bit and wherein the verifier component is configured to check the validity of the additional data by verifying that said initial address and final address are equal.

13. The device according to claim 12, wherein each bit of said plurality of bits is generated in a random order.

14. The device according to claim 8, wherein the monitoring component is a duration measurement unit, wherein generation of said at least one bit is triggered at a first time, wherein said at least one bit is retrieved at a second time and wherein the verifier component is configured to check the validity of the additional data by verifying that at least a predefined duration has elapsed between said first and second times.

15. The device according to claim 8, wherein the device is a chip, a system-on-a-chip or a printed circuit board.
